Europäisches Patentamt

European Patent Office

Office européen des brevets

(19)

(11) Numéro de publication : **0 157 664**
**B1**

(12) **FASCICULE DE BREVET EUROPÉEN**

(45) Date de publication du fascicule du brevet :
15.03.89

(51) Int. Cl.⁴ : **G 11 B 11/10, H 01 F 10/30**

(21) Numéro de dépôt : **85400347.2**

(22) Date de dépôt : **25.02.85**

(54) **Milieu d'enregistrement magnétooptique.**

(30) Priorité : **29.02.84 FR 8403113**

(43) Date de publication de la demande :
**09.10.85 Bulletin 85/41**

(45) Mention de la délivrance du brevet :
**15.03.89 Bulletin 89/11**

(84) Etats contractants désignés :
**DE FR GB IT NL**

(56) Documents cités :
**DE--A-- 3 124 573**
**US--A-- 3 721 613**
**NHK TECHNICAL MONOGRAPH, no. 33, septembre 1983, pages 3-26, Tokyo, JP; Y. TOGAMI et al.: "Amorphous GdCo film for magneto-optical disk storage"**
**THIN SOLID FILMS, vol. 96, no. 4, octobre 1982, pages 317-326, Elsevier Sequoia, NL; R.S. NOWICKI et al.: "General aspects of barrier layers for very-large-scale integration applications"**

(73) Titulaire : **BULL S.A.**
**121, avenue de Malakoff**
**F-75764 Paris Cédex 16 (FR)**

(72) Inventeur : **Gueugnon, Catherine**
**22 Rue Servandoni**
**F-75006 Paris (FR)**
Inventeur : **Bernstein, Pierre**
**3, rue Lamartine Saint Germain de la Grange**
**F-78640 Neauphle le Chateau (FR)**

(74) Mandataire : **Gouesmel, Daniel et al**
**BULL S.A. Industrial Property Department 25 avenue de la Grande-Armée GA-4X018**
**F-75016 Paris (FR)**

Jouve, 18, rue St-Denis, 75001 Paris, France

# EP 0 157 664 B1

**Description**

La présente invention concerne un milieu d'enregistrement magnétooptique. Elle est plus particulièrement applicable aux mémoires à disques magnétooptiques.

Les mémoires à disques sont de plus en plus utilisées dans les systèmes de traitement de l'information.

Dans celles-ci, les informations sont portées par des disques magnétiques et sont contenues à l'intérieur de pistes d'enregistrement concentriques circulaires. Elles se présentent sous la forme d'une succession de petits domaines magnétiques répartis sur toute la longueur de la piste et ayant des inductions magnétiques de même module et de sens opposé.

La tendance actuelle du développement des mémoires à disques est d'accroître aussi bien la densité longitudinale que la densité radiale des informations (la densité longitudinale est le nombre d'informations par unité de longueur mesurée suivant la circonférence d'une piste, alors que la densité radiale est définie comme le nombre de pistes par unité de longueur mesurée suivant le diamètre du disque). A cet effet, les mémoires à disques magnétooptiques sont des solutions très intéressantes puisque les densités radiale et longitudinale obtenues sont de l'ordre respectivement de 10 000 pistes par centimètre et de 10 000 informations par centimètre.

Dans les mémoires magnétooptiques, l'écriture est effectuée soit en utilisant des transducteurs magnétiques généralement composés d'un circuit magnétique autour duquel est disposé un enroulement et qui comporte un entrefer, soit en utilisant un mode d'écriture thermomagnétique, le principe d'un tel mode d'écriture étant par exemple rappelé dans le brevet français N° 2 514 913 déposé par la Compagnie Internationale pour l'Informatique CII Honeywell Bull, le 16 Octobre 1981 et dont l'inventeur est M. Jean-Pierre LAZZARI.

La lecture est effectuée par un dispositif optoélectronique comprenant un ensemble de moyens optiques et des transducteurs photoélectroniques associés à des circuits électroniques, les transducteurs transformant la lumière qu'ils reçoivent en un signal électrique. En d'autres termes, les mémoires magnétooptiques sont des mémoires où les informations sont portées par des disques magnétiques, et lues par des dispositifs opto électroniques.

Le milieu magnétique d'enregistrement a des propriétés magnétooptiques, des rappels sur les matériaux ayant des propriétés magnétooptiques et sur les effets Faraday et Kerr étant effectués ci-dessous.

Parmi les matériaux ayant des propriétés magnétooptiques, on compte notamment les alliages comportant un métal de la première série de transition (Fe, Co, Vn, Cr, Mn, Ni, Cu) et un des métaux du groupe des terres rares lourds tel que le terbium, ou encore le gadolinium ou encore le dysprosium. Ces matériaux et leurs propriétés magnétooptiques sont par exemple décrits dans l'article intitulé « Magnetic and magnetooptic properties of amorphous Gd-Fe-Bi films » de P. Hausen et M. URNER-WILLE Journal of applied physics 50 (11), Novembre 1979, pages 7471 à 7476. Pour tout matériau de ce type, et plus généralement pour tout matériau ayant des propriétés magnétooptiques, l'effet magnétooptique repose sur le principe d'interaction d'une lumière polarisée rectiligne avec l'état magnétique du matériau. Si cette interaction a lieu par transmission de la lumière à travers le matériau, l'effet magnétooptique est appelé effet Faraday, alors que si elle a lieu par réflexion l'effet magnétooptique est appelé effet Kerr.

On rappelle qu'une lumière est polarisée d'une façon rectiligne lorsque le vecteur champ électrique conserve toujours la même direction dans le plan perpendiculaire à la direction de propagation du rayonnement, le plan de polarisation étant défini comme le plan contenant la direction de propagation de la lumière et le vecteur champ électrique.

L'interaction d'une lumière polarisée rectiligne avec l'état magnétique du matériau constituant le milieu magnétique d'enregistrement de la mémoire magnétooptique a pour conséquence la rotation du vecteur champ électrique dans le plan perpendiculaire à la direction de propagation.

On observe, qu'après avoir traversé (s'il s'agit de l'effet Faraday), ou qu'après s'être réfléchi sur, (s'il s'agit de l'effet Kerr) le matériau magnétique constituant le milieu magnétique d'enregistrement, le vecteur champ électrique de la lumière polarisée subit une rotation, dite par convention égale à un angle — θ lorsque la lumière rencontre un domaine où l'aimantation du milieu a un premier sens, alors que cette rotation est égale à + θ lorsque la lumière polarisée rencontre un domaine magnétique où l'aimantation a un second sens (opposé au premier sens).

Pour lire les informations enregistrées sur un milieu magnétique d'enregistrement ayant des propriétés magnétooptiques, il suffit de détecter le sens de la rotation du vecteur champ électrique. (Ce qui permet de reconnaître le sens de l'aimantation dans le domaine magnétique rencontré par la lumière polarisée rectiligne).

Pour ce faire, les moyens optoélectroniques mentionnés plus haut, incluent un système optique comprenant un analyseur de lumière, ainsi qu'il est rappelé dans le brevet 2 514 913 précité. L'analyseur de lumière est disposé de telle sorte que, lorsque le vecteur champ électrique subit une rotation (— θ), le signal délivré par les moyens optoélectroniques a par exemple, une tension nulle, alors que dans le cas où le vecteur champ électrique a tourné d'une rotation positive (+ θ) le signal délivré par les moyens optoélectroniques a une tension non nulle.

2

EP 0 157 664 B1

Pour tout matériau magnétique ayant des propriétés magnétooptiques, on définit une grandeur appelée facteur de mérite F telle que :

$$F = R \times (\sin \theta)^2,$$

où R est le facteur de réflexion du matériau (c'est-à-dire le pourcentage du rayonnement qui se réfléchit sur le matériau ayant des propriétés magnétooptiques), et $\theta$ est l'angle de rotation du vecteur champ électrique, tel que défini ci-dessus.

On montre que plus ce facteur de mérite est élevé, plus le rapport signal/bruit du dispositif optoélectronique de lecture est élevé.

On connaît des milieux magnétiques d'enregistrement ayant des propriétés magnétooptiques dont le facteur de mérite est élevé. De tels milieux sont par exemple décrits dans l'article de G. A. N. CONNEL, R. ALLEN, et M. MANSURIPUR, du centre de recherche de la Firm XEROX de Palo Alto aux U.S.A. ayant pour titre « Interference enhanced Kerr spectroscopy for very thin absorbing films-applications to amorphous terbium iron », publié dans le Journal of Magnetism and Magnetic materials N° 35 de 1983, de la North Holland Publishing Company.

Un tel milieu à propriétés magnétooptiques, est multicouches. Il comprend successivement une couche réflectrice, généralement métallique, disposée sur un substrat, une première couche diélectrique, une couche en matériau magnétique ayant des propriétés magnétooptiques, à savoir un alliage de préférence comportant du fer ou du cobalt, et une terre rare lourd par exemple du terbium ou du gadolinium, et une seconde couche diélectrique. La première et la seconde couches diélectriques sont très fréquemment constituées d'un oxyde de silicium, ayant soit la formule chimique $SiO_2$, ou la formule chimique $SiO$, en raison du bras prix de cet oxyde et de son fort coefficient de transparence à la lumière.

La première couche diélectrique permet de créer un système optique produisant des interférences, comme il sera expliqué ci-dessous, alors que la seconde couche diélectrique est une couche protectrice permettant d'éviter l'oxydation de la couche magnétique ayant des propriétés magnétooptiques, une fois celle-ci déposée.

L'épaisseur des couches est de l'ordre de quelques dizaines à quelques centaines d'angströms, de quelques millièmes à quelques centièmes de micromètre et peut même atteindre un à deux milliers d'angströms (de 1 à 2 dixièmes de micromètre).

La couche magnétique est anisotrope et son axe de facile aimantation est perpendiculaire à sa surface. De la sorte l'aimantation dans la couche magnétique est également perpendiculaire à la surface de celle-ci.

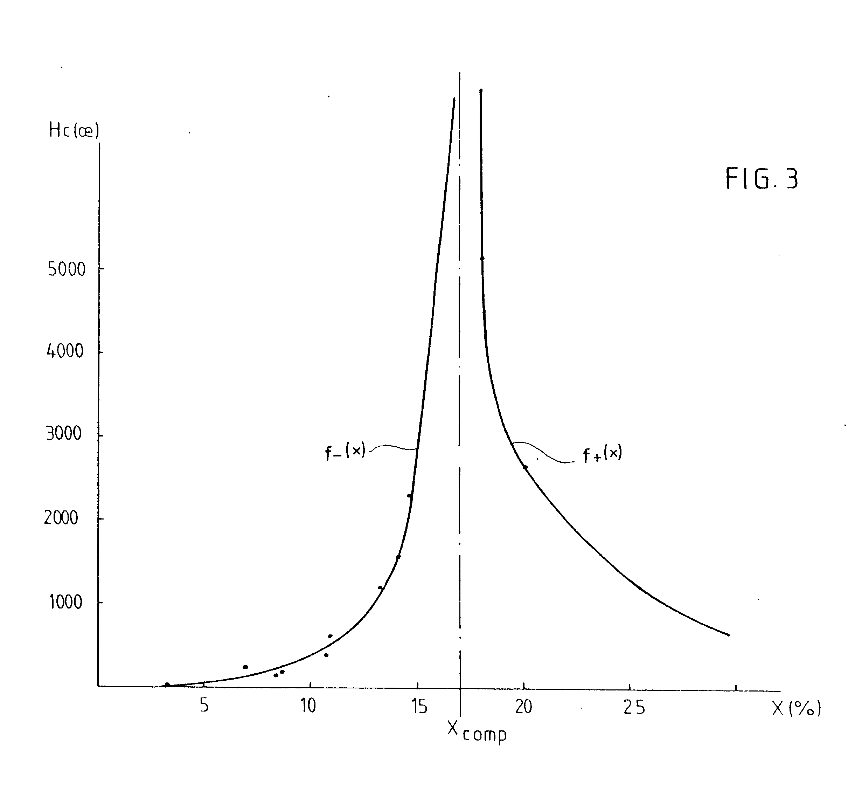

Si l'on considère un faisceau incident de lumière polarisée rectiligne se dirigeant selon une direction allant de la seconde couche diélectrique vers la couche réflectrice, on montre que ce faisceau lumineux se décompose en plusieurs parties (ainsi qu'il sera expliqué en détail plus bas, en relation avec la figure 2), le vecteur champ électrique de chacune de ces parties subissant une rotation, soit uniquement par effet Kerr, soit uniquement par effet Faraday soit par combinaison des deux effets.

Ces différentes parties, de même longueur d'onde, parcourent des chemins optiques différents. Elles se recomposent, en sortant du milieu d'enregistrement, à la surface de sa seconde couche diélectrique en contact avec l'air (on suppose que le milieu d'enregistrement multicouches est en contact avec l'air par la surface de sa seconde couche diélectrique) sous forme d'interférences lumineuses.

Dans l'article précité, les auteurs indiquent que la rotation du vecteur champ électrique du faisceau réfléchi recomposé sous forme d'interférences lumineuses est beaucoup plus élevée que si l'on n'utilisait que la seule couche magnétique, en l'absence de couches réflectrices et de couches diélectriques. Ceci est dû à la combinaison des effets Kerr et Faraday à l'intérieur du milieu d'enregistrement multicouches.

Dans l'article précité, les auteurs indiquent également que, en fonction, tant de la longueur d'onde du faisceau lumineux incident, que de l'épaisseur de chacune des couches, le facteur de réflexion et l'angle de rotation du vecteur champ électrique $\theta$ varient de façon contraire. De la sorte, pour une longueur d'onde donnée, il faut trouver les épaisseurs de chacune des couches constituant le milieu d'enregistrement, de telle façon que le facteur de mérite soit maximum.

Les milieux magnétiques d'enregistrement tels que précédemment décrits présentent l'inconvénient majeur suivant :

On constate en effet que les propriétés magnétiques du milieu magnétique d'enregistrement multicouches ne restent pas constantes dans le temps. En particulier suivant que la teneur de départ X (appelée également composition de départ) en terre rare, de l'alliage fer-terre rare, constituant la couche magnétooptique faisant partie du milieu d'enregistrement multicouches tel que décrit ci-dessus, est inférieure ou supérieure à une valeur déterminée propre à chaque alliage, appelée composition de compensation Xcomp, on observe les phénomènes suivants :

— si $X < Xcomp$, le champ coercitif $H_c$ du milieu magnétique d'enregistrement diminue avec le temps, alors que

— si $X > Xcomp$, on observe que le champ coercitif $H_c$ croît avec le temps.

Ce phénomène observé est extrêmement gênant car le champ coercitif du milieu magnétique d'enregistrement doit rester compris entre certaines limites, par exemple entre 500 et 1 000 oersteds ($5 \cdot 10^5/4\Pi$ et $10^6/4\Pi$ A/m).

3

Dans le cas où le champ coercitif croît avec le temps, sa valeur devient rapidement supérieure à cette valeur de 1 000 oersteds (soit $10^6/4\Pi$ A/m) et il devient extrêmement difficile aux moyens d'écriture actuellement utilisés de produire des champs magnétiques supérieurs à ce champ coercitif, ce qui rend l'écriture de plus en plus difficile avec le temps.

A l'inverse, si le champ coercitif diminue avec le temps et devient inférieur à 500 oersteds (soit $1,25 \cdot 10^5/\Pi$ A/m), le milieu magnétique d'enregistrement devient sensible au champ magnétique externe parasite, et aussi bien l'écriture que la lecture risque de s'en trouver affectées. Le taux d'erreurs aussi bien à l'écriture qu'à la lecture devient alors trop élevé.

La présente invention permet de remédier à ces inconvénients et permet de maintenir constante dans le temps les propriétés magnétiques du milieu magnétique d'enregistrement. Ceci est obtenu en disposant de part et d'autre de la couche magnétooptique en alliage de fer ou de cobalt et de terre rare lourd, des moyens pour empêcher toute diminution du nombre d'atomes de terre rare participant au magnétisme de la couche magnétooptique.

Selon l'invention, le milieu magnétique d'enregistrement multicouches comprenant au moins une couche magnétique formée d'un alliage d'un métal de la première série de transition et un métal du groupe des terres rares lourds, entouré d'au moins deux couches d'oxyde diélectriques, est caractérisé en ce que, il comprend des couches de métal du groupe des terres rares disposées chacune entre la couche magnétique et l'une des couches d'oxyde diélectriques, ayant pour fonction d'empêcher la diminution du nombre d'atomes de terre rare participant au magnétisme de la couche magnétique.

Les couches de métal des terres rares sont souvent mais non nécessairement constituées du même métal que celui qui rentre dans la composition de la couche magnétique (Gd, Tb, Dy, Ho, etc...).

La description suivante de la présente invention donnée à titre d'exemple se réfère aux dessins annexés :

Sur ces dessins :

— la figure 1 : montre un milieu magnétique d'enregistrement multicouches selon l'art antérieur,

— la figure 2 : illustre le fonctionnement du milieu magnétique d'enregistrement selon l'art antérieur montré à la figure 1,

— la figure 3 : montre la courbe donnant la variation du champ coercitif du milieu magnétique d'enregistrement selon l'art antérieur pour une épaisseur donnée de la couche magnétooptique qui rentre dans sa composition, en fonction de la teneur en terres rares de l'alliage constituant la couche magnétooptique,

— la figure 4 : est une série de courbes montrant pour diférentes épaisseurs de la couche magnétooptique en alliage de fer-terre rare du milieu magnétique d'enregistrement, l'évolution du champ coercitif (exprimée en oersteds) en fonction du temps, avec 1 oersted = $10^3/4\Pi$ A/m,

— la figure 5 : montre l'évolution au cours du temps du champ coercitif d'un milieu magnétique d'enregistrement où la teneur X de départ en terre rare de l'alliage constituant la couche magnétooptique est supérieure à la composition de compensation,

— la figure 6 : montre comment, au cours du temps le cycle d'hystérésis magnétooptique du milieu magnétique d'enregistrement devient de moins en moins rectangulaire, ce qui a pour effet de diminuer fortement l'anisotropie du milieu magnétique d'enregistrement, la rotation remanente $\theta_R$ et par conséquent le signal de lecture des informations enregistrées,

— la figure 7 : montre le milieu magnétique d'enregistrement selon l'invention,

— la figure 8 : montre trois courbes donnant l'évolution du champ coercitif en fonction du temps, d'un milieu magnétique d'enregistrement selon l'invention pour trois épaisseurs différentes des couches de terre rare intercalées entre la couche magnétooptique et les couches diélectriques,

— la figure 9 : représente un second mode de réalisation de l'invention,

— la figure 10 : montre comment le champ coercitif reste constant en fonction du temps pour ce second mode de réalisation.

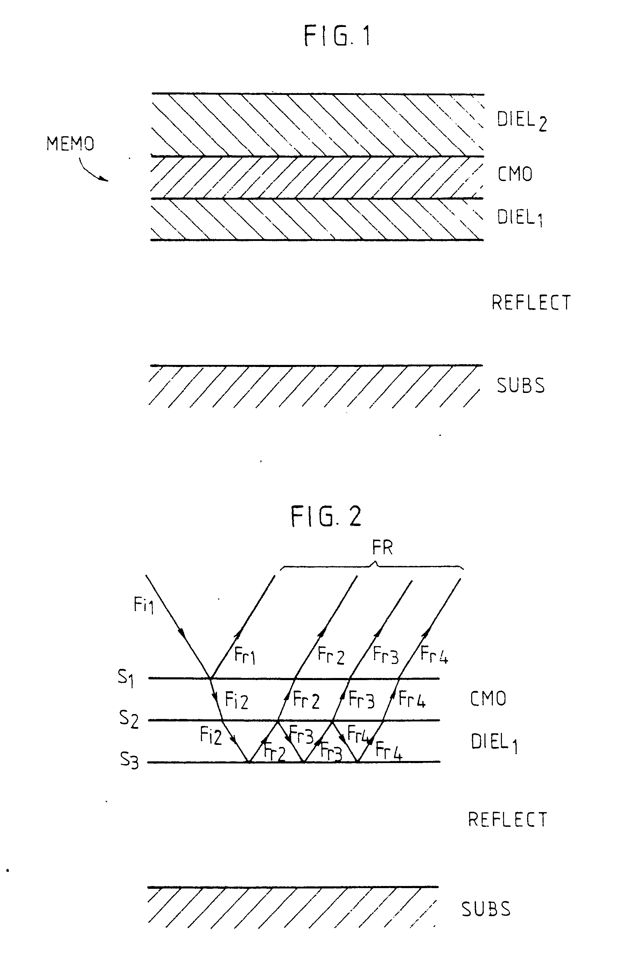

Afin de mieux comprendre comment est constitué et comment fonctionne le milieu magnétique d'enregistrement ayant des propriétés magnétooptiques selon l'invention, il est utile de faire quelques rappels sur les milieux magnétiques d'enregistrement à propriétés magnétooptiques, selon l'art antérieur. Ces rappels illustrent d'une part, à l'aide des figures 1 et 2, la constitution et le fonctionnement d'un milieu magnétique d'enregistrement selon l'art antérieur, et d'autre part comment un tel milieu selon l'art antérieur ne conserve pas constante ses propriétés magnétiques au cours du temps, ce qui est illustré par les figures 3 à 6.

On considère les figures 1 et 2.

Ainsi qu'on peut le voir à la figure 1, le milieu magnétique d'enregistrement à propriétés magnétooptiques selon l'art antérieur MEMO comprend :

— un substrat SUBS, de préférence en matière isolante amagnétique,

— une couche réflectrice de la lumière REFLECT, de préférence réalisée en un matériau métallique par exemple de l'aluminium,

— une première couche diélectrique $DIEL_1$, réalisée en un matériau amagnétique, tel que l'un des oxydes de silicium $S_{iO2}$, $S_{iO}$,

— une couche magnétique CMO ayant des propriétés magnétooptiques, réalisée de préférence en un alliage de fer ou de cobalt et d'un métal du groupe des terres rares lourds, tel que le terbium ou le gadolinium ou encore le dysprosium,

— une seconde couche diélectrique $DIEL_2$, réalisée de préférence dans le même matériau que la première couche diélectrique $DIEL_1$.

L'épaisseur des deux couches diélectriques $DIEL_1$ et $DIEL_2$ est de l'ordre de quelques centaines d'angströms. De même, l'épaisseur de la couche magnétooptique CMO est de préférence de l'ordre de quelques centaines à environ deux milliers d'angströms.

L'épaisseur des couches $DIEL_1$, $DIEL_2$ et CMO est suffisamment faible pour que le coefficient de transmission de la lumière de chacune d'entre elles soit non négligeable.

Ainsi qu'il a été dit plus haut, la couche diélectrique $DIEL_1$ est déposée sur la couche réflectrice REFLECT, immédiatement après le dépôt de cette dernière sur le substrat SUBS pour créer un système optique interférentiel. (Voir également ci-dessous en référence à la figure 2).

La couche diélectrique $DIEL_2$ est déposée immédiatement après le dépôt de la couche magnétooptique CMO, de manière à éviter toute oxydation ultérieure de celle-ci.

Dans la pratique courante, la teneur X en terre rare de l'alliage constituant la couche magnétooptique CMO, est comprise entre 10 à 40 %. On rappelle que la teneur X (également appelée composition de l'alliage) en terre rare est le pourcentage d'atomes de terres rares contenu dans l'alliage par rapport au nombre total d'atomes que celui-ci contient. Ainsi, une teneur X de 20 % signifie que sur 100 atomes d'alliage, il y a 20 atomes de terre rare et 80 atomes de fer (ou de cobalt).

Le fonctionnement du milieu magnétique d'enregistrement de la figure 1 est plus particulièrement illustré à la figure 2. On considère donc un faisceau de lumière incident $F_{i1}$ de lumière polarisée rectiligne. Ce faisceau se divise en deux parties à savoir un rayonnement $F_{i2}$ qui traverse la couche CMO et un rayonnement $F_{r1}$ qui se réfléchit sur la surface $S_1$ de la couche CMO. Le vecteur champ électrique de ce rayonnement $F_{r1}$ a subi une rotation par effet Kerr $\theta_k$ par rapport au vecteur champ électrique du faisceau incident $F_{i1}$.

De même, le vecteur champ électrique du rayonnement $F_{i2}$ subit une rotation d'angle $\theta_F$ par effet Faraday par rapport à la direction du vecteur champ électrique du faisceau incident $F_{i1}$.

Le faisceau $F_{i2}$ traverse la surface $S_2$ (dans le sens de propagation allant de CMO vers $DIELI_1$ il n'y a pratiquement pas de réflexion sur la surface $S_2$, le coefficient de réflexion étant très faible) et se réfléchit sur la surface $S_3$ de la couche réflectrice REFLECT en devenant le faisceau $F_{r2}$ qui se divise en deux parties en arrivant sur la surface $S_2$, l'une traversant cette surface et toujours appelée $F_{r2}$, l'autre se réfléchissant sur la surface $S_2$ en devenant $F_{r3}$ (dans le sens de propagation allant de $DIELI_1$ vers CMO, le coefficient de réflexion n'est pas négligeable).

Le vecteur champ électrique de $F_{r2}$ a donc subi une rotation Faraday $\theta_F$ alors que celui de $F_{r3}$ a subi une rotation Kerr $\theta_k$.

Il est clair que le rayonnement $F_{r3}$ peut se décomposer à la surface $S_2$ à nouveau en deux parties, la partie qui se réfléchit sur cette surface $S_2$ venant à nouveau frapper la surface $S_3$ du réflecteur REFLECT et subissant des réflexions et des transmissions sur et à travers les surfaces $S_2$ et $S_3$ du même type que celles qui ont été décrites pour les rayonnements $F_{i2}$ et $F_{r2}$.

On voit qu'à partir du faisceau incident $F_{i1}$, on obtient une série de rayonnements $F_{r1}$, $F_{r2}$, $F_{r3}$, $F_{r4}$, etc... ayant subi un nombre différent de réflexions et de transmissions sur et à travers les surfaces $S_1$, $S_2$, $S_3$, leurs vecteurs champ électrique ayant subi un nombre variable de rotations par effet Faraday ou par effet Kerr. Ces différents rayonnements se recombinent en un rayonnement $F_R$, sous forme d'interférences lumineuses. On observe alors ainsi que l'ont fait les auteurs CONNEL, ALLEN et MANSURIPUR mentionnés plus haut, que la rotation globale du vecteur champ électrique du rayonnement $F_R$, est très supérieure à la rotation qu'aurait ce même vecteur champ électrique si le rayonnement lumineux $F_{i1}$ venait rencontrer un milieu d'enregistrement magnétique composé de la seule couche magnétooptique CMO déposée directement sur le substrat SUBS. Ainsi qu'il a été indiqué plus haut, on montre qu'une forte rotation et un bon facteur de réflexion du vecteur champ électrique permettent d'obtenir un meilleur rapport signal/bruit des dispositifs optoélectroniques de lecture des informations magnétiques contenues sur le milieu d'enregistrement MEMO.

On considère désormais la figure 3 qui montre la courbe de variation de champ coercitif $H_C$ en fonction de la composition de l'alliage constituant la couche magnétooptique CMO. La courbe établie à la figure 3, l'a été pour une épaisseur de la couche magnétooptique CMO égale à 2 000 angströms et a été relevée immédiatement après la fabrication du milieu d'enregistrement MEMO.

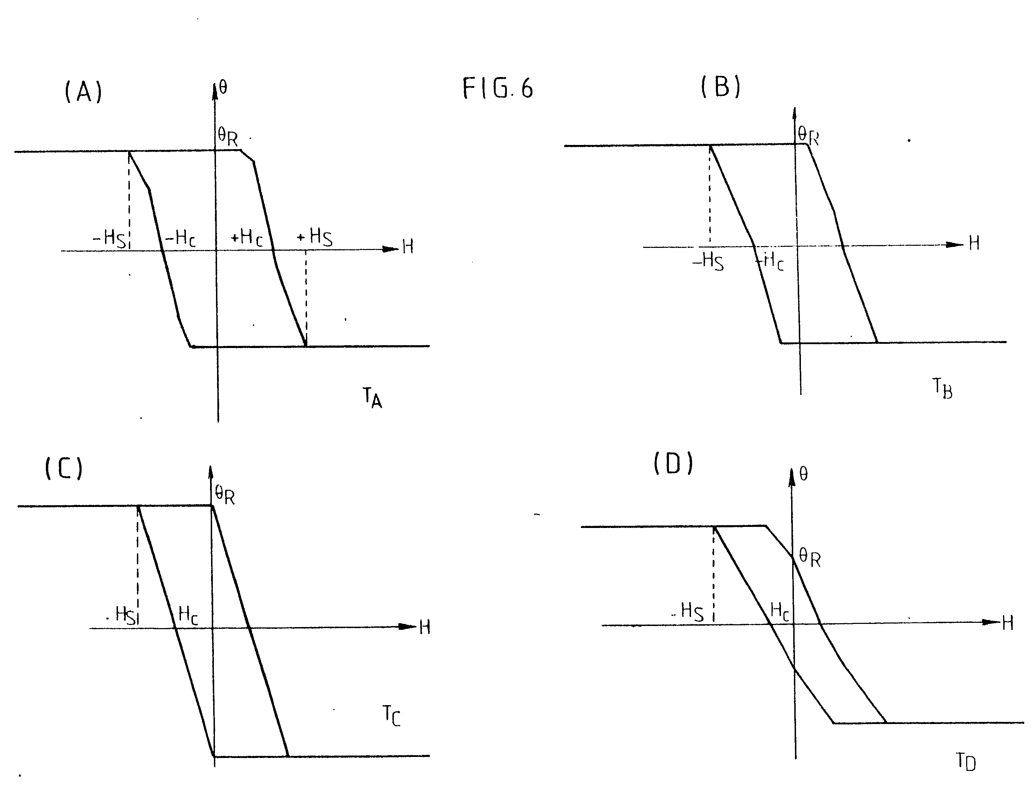

Il convient de préciser que le champ coercitif mesuré est le champ coercitif dit champ coercitif magnétooptique. Celui-ci est obtenu à partir du cycle d'hystérésis magnétooptique du milieu d'enregistrement MEMO, ce cycle étant obtenu de la manière suivante : on envoie une lumière polarisée rectiligne normalement à la surface du milieu magnétique d'enregistrement c'est-à-dire parallèlement à l'axe de facile aimantation de la couche magnétooptique CMO, et on mesure la rotation $\theta$ du vecteur champ électrique du faisceau réfléchi $F_R$ recueilli par rapport à la direction du vecteur champ électrique du faisceau incident $F_{i1}$ et ce en fonction du champ magnétique H appliqué au milieu magnétique d'enregistrement selon cette direction perpendiculaire à la surface du milieu d'enregistrement. On obtient alors un cycle d'hystérésis qui a la forme indiquée à la figure 6, par exemple en A. Il est rappelé que le champ coercitif (appelé champ coercitif magnétooptique) est la valeur de H pour laquelle la rotation $\theta$ est nulle. On appelle rotation rémanente $\theta_R$, la valeur de $\theta$ obtenue pour H = 0. On voit, à la figure 6, que la forme du cycle d'hystérésis $\theta$ (H) est analogue à celle d'un cycle d'hystérésis magnétique classique B (H) où B est l'induction magnétique. Pour ce dernier on obtient un champ coercitif $H'_c$ (pour lequel l'induction B s'annule), ce champ coercitif $H'_c$ étant voisin de $H_c$, le champ coercitif magnétooptique.

Revenant à la figure 3, on voit que la courbe $H_c = f(X)$ se décompose en deux courbes, à savoir f—(X), f+(X).

La première courbe f—(X) est obtenue pour les valeurs de X inférieures à une composition dite composition de compensation $X_{comp}$, pour laquelle le champ coercitif magnétooptique $H_c$ a une valeur très grande, impossible à mesurer pratiquement. On voit que la courbe f—(X) est une courbe qui croît en fonction de X.

A l'inverse la courbe f+ (X) obtenue pour les valeurs de X supérieures à $X_{comp}$ décroît en fonction de X.

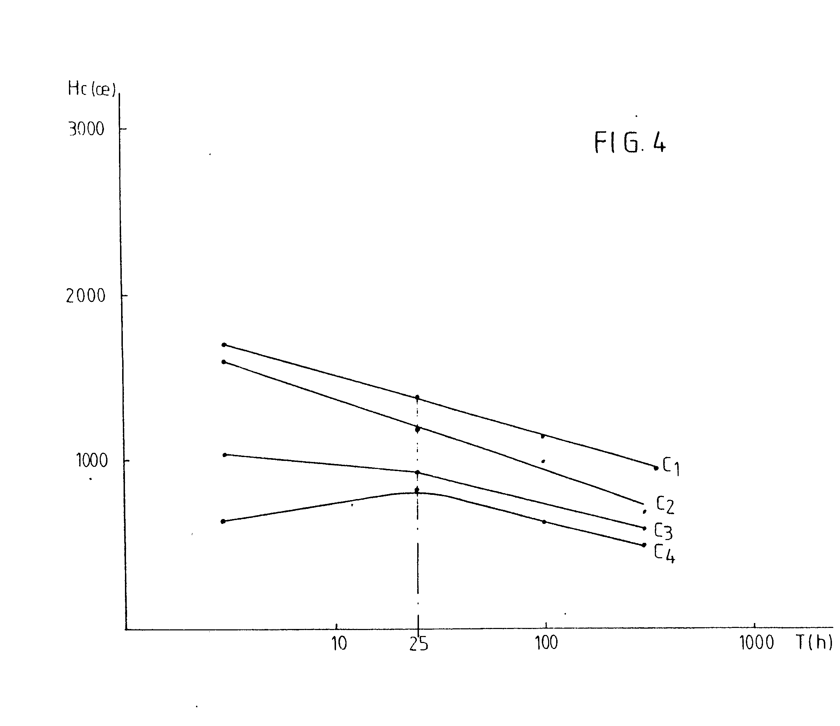

On considère la figure 4.

Cette figure montre 4 courbes $C_1$ à $C_4$ de variation du champ coercitif magnétooptique $H_c$ en fonction du temps T mesuré, en heures, le temps T = 0 correspondant au moment où le milieu d'enregistrement magnétique MEMO vient d'être réalisé. Pour chacune de ces courbes, la composition de départ $X_d$, c'est-à-dire la teneur en terre rare à l'instant T = 0 est la même et est inférieure à la composition de compensation $X_{comp}$. Chacune de ces courbes $C_1$ à $C_4$ est établie pour des milieux d'enregistrement MEMO où les épaisseurs $e_1$ à $e_4$ de la couche magnétooptique CMO sont différentes et respectivement égales à 300, 250, 200 et 150 Å (0,03, 0,025, 0,02, 0,015 micromètre). Ces milieux MEMO sont constitués d'un alliage Fe-Terbium où X = 14,5 % pour le Terbium (85,5 % pour le fer).

On voit qu'au bout d'un temps T égal à 25 heures environ, la décroissance de Hc est assez rapide, puisque en 300 heures environ, le champ Hc perd environ le tiers de la valeur qu'il avait au bout de 25 heures.

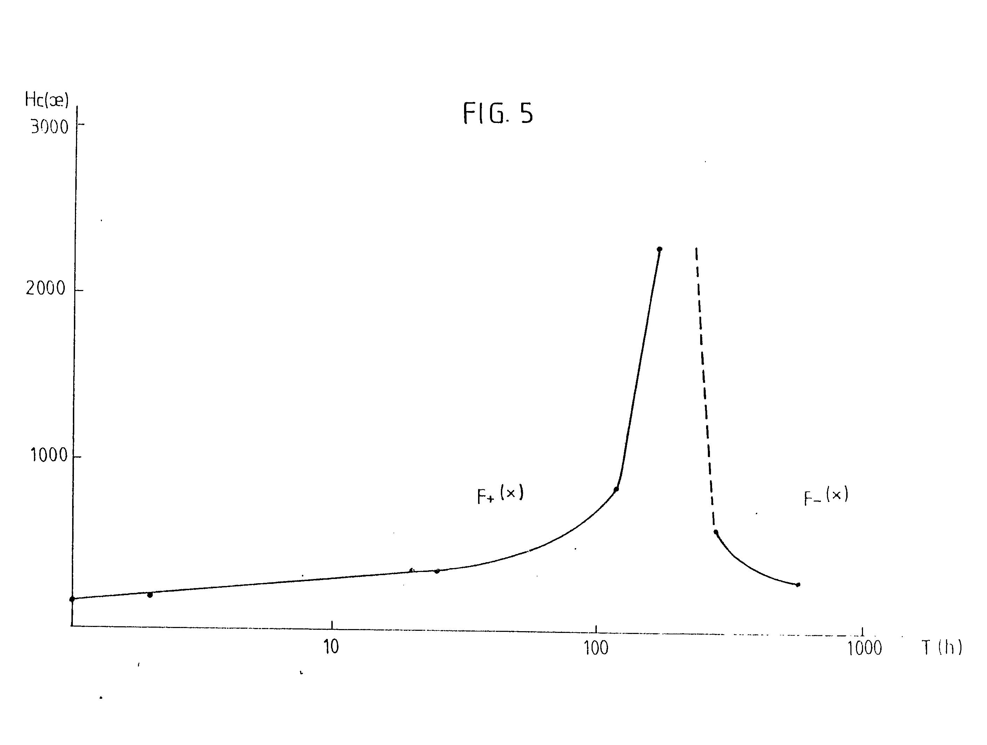

On considère désormais la figure 5. Elle montre la variation du champ coercitif Hc en fonction du temps, d'un milieu magnétique d'enregistrement MEMO d'épaisseur égale à 2 000 Å, (0,2 micromètre) ayant une composition de départ $X_d$ supérieure à la composition de compensation $X_{comp}$. On voit que cette figure comprend deux courbes F+ (X) et F— (X), la première étant une fonction croissante du temps alors que la seconde est une fonction décroissante du temps. Pour une certaine valeur du temps, le champ coercitif est très grand, tout en devenant impossible à mesurer.

On considère désormais la figure 6 qui montre 4 cycles d'hystérésis magnétooptiques du milieu magnétique d'enregistrement MEMO en Fe-Tb à des instants TA, TB, TC, TD, différents avec $T_A$ inférieur à $T_B$, inférieur à $T_C$, inférieur à $T_D$. L'instant $T_A$ est proche de l'instant où la réalisation du milieu MEMO s'achève, ce dernier étant tel que la composition X en terbium est inférieure à la composition de compensation, son épaisseur étant de 250 Å (0,025 micromètre).

On vérifie que le champ coercitif diminue en fonction du temps (les échelles pour $\theta$ et H sont les mêmes pour chacun des quatre cycles A, B, C, D présentés). On observe de plus que le cycle se rétrécit et que sa rectangularité diminue, ce qui signifie que l'anisotropie magnétique du milieu d'enregistrement diminue également : on observe en effet, que le rapport $HC/H_S$ diminue au fur et à mesure que le temps croît, $H_s$ étant le champ de saturation. On observe de plus que la forme du cycle d'hystérésis observée se rapproche de plus en plus de celle du cycle d'hystérésis selon un axe difficile d'aimantation, lorsque le temps croît.

En comparant les figures 3, 4 et 5, on peut conclure que la composition de l'alliage constituant la couche magnétooptique se modifie au cours du temps, la teneur apparente en métal du groupe des terres rares diminuant au cours du temps. Cela signifie en d'autres termes que le nombre d'atomes de terre rare de la couche magnétooptique diminue avec le temps, ce phénomène pouvant provenir par exemple soit d'une migration des atomes de terre rare vers les couches de diélectrique, par affinité de ceux-ci pour les atomes d'oxygène des couches diélectriques soit d'une migration des atomes d'oxygène contenus dans le diélectrique vers la couche magnétooptique s'accompagnant de l'oxydation des atomes de terre rare de celle-ci, soit encore de la simultanéité de ces deux types de migrations.

En effet, comparons les figures 3 et 4 et plus particulièrement la courbe f— (X) avec l'ensemble des courbes $C_1$ à $C_4$ de la figure 4. En effet à la figure 4, la composition de départ est inférieure à la composition de compensation et on voit décroître le champ coercitif en fonction du temps. Si l'on regarde la courbe f— (X) à la figure 3, on voit que partant d'une composition de départ X inférieure à $X_{comp}$, si la composition décroît, le champ coercitif décroît.

De même si l'on considère la courbe f+ (X) à la figure 5, on voit qu'à partir de la composition de départ $X_d$ supérieure à $X_{comp}$ le champ coercitif croît jusqu'à atteindre au bout d'un temps déterminé, une valeur très grande impossible à mesurer. Si l'on considère maintenant la courbe f+ (X) de la figure 3, on voit que partant d'une valeur de X supérieure à $X_{comp}$, si la composition X diminue, le champ coercitif $H_c$ augmente jusqu'à atteindre une valeur très grande, impossible à mesurer pour une valeur de $X = X_{comp}$.

Cette analyse est également corroborée par l'expérience, puisque les expériences d'analyse de la composition physicochimique du milieu d'enregistrement MEMO au bout d'un certain temps après la réalisation de ce milieu, ont montré une forte concentration d'atomes de terre rare aux surfaces $S_1$ et $S_2$ (se reporter à la figure 2). Cette diminution des atomes de terre rare actifs participant au magnétisme de la couche magnétooptique est due aux phénomènes de migration mentionnés ci-dessus.

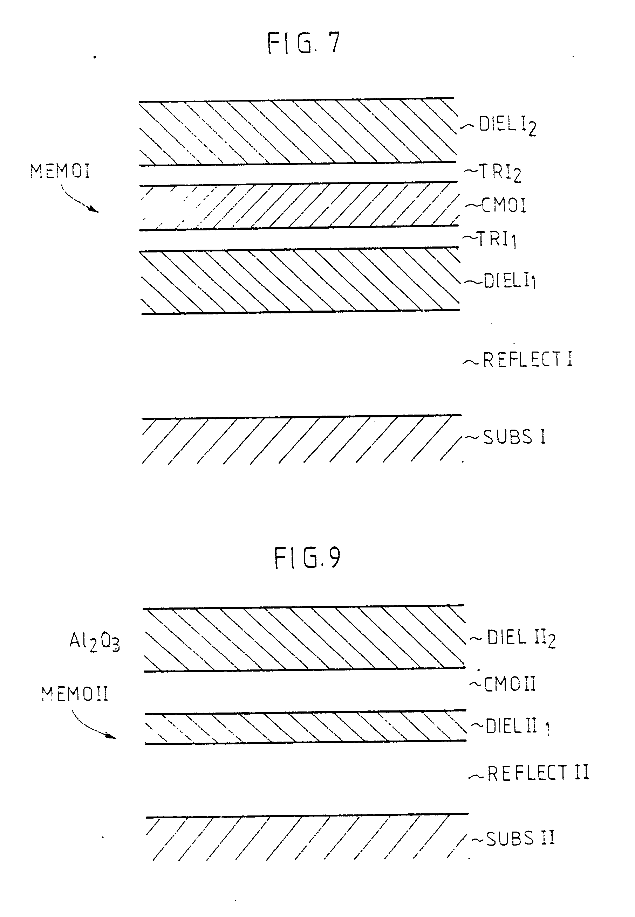

Le milieu d'enregistrement MEMOI selon l'invention montré à la figure 7 permet de remédier à ces inconvénients en bloquant à la fois la migration des atomes de terre rare vers les couches diélectriques et la migration des atomes d'oxygène vers la couche magnétique, par l'introduction entre la couche magnétooptique et les deux couches diélectriques qui l'entourent, d'une mince couche de terre rare lourde (de l'ordre de quelques millièmes de micromètre). Ces deux couches de terres rares constituent ainsi des moyens pour empêcher la diminution du nombre d'atomes de terre rare participant au magnétisme de la couche magnétique.

Ainsi qu'on peut le voir à la figure 7, le milieu magnétique d'enregistrement selon l'invention MEMOI comprend :

le substrat SUBSI ;
la couche réflectrice REFLECTI ;
la première couche diélectrique $DIELI_1$ ;
la première couche de terre rare $TRI_1$ ;
la couche magnétooptique CMOI ;
la seconde couche de terre rare $TRI_2$ ;
la seconde couche diélectrique $DIELI_2$.

Ainsi qu'il a été indiqué plus haut, les deux couches $TRI_1$, et $TRI_2$ de terre rare ont une épaisseur de quelques dizaines d'angströms (quelques millièmes de micromètre). Les couches diélectriques $DIELI_1$ et $DIELI_2$, la couche magnétooptique CMOI, la couche réflectrice REFLECTI ainsi que le substrat SUBSI sont identiques aux couches diélectriques $DIEL_1$ et $DIEL_2$, à la couche magnétooptique CMO, à la couche réflectrice REFLECT, ainsi qu'au substrat SUBS du milieu magnétique MEMO de la figure 1.

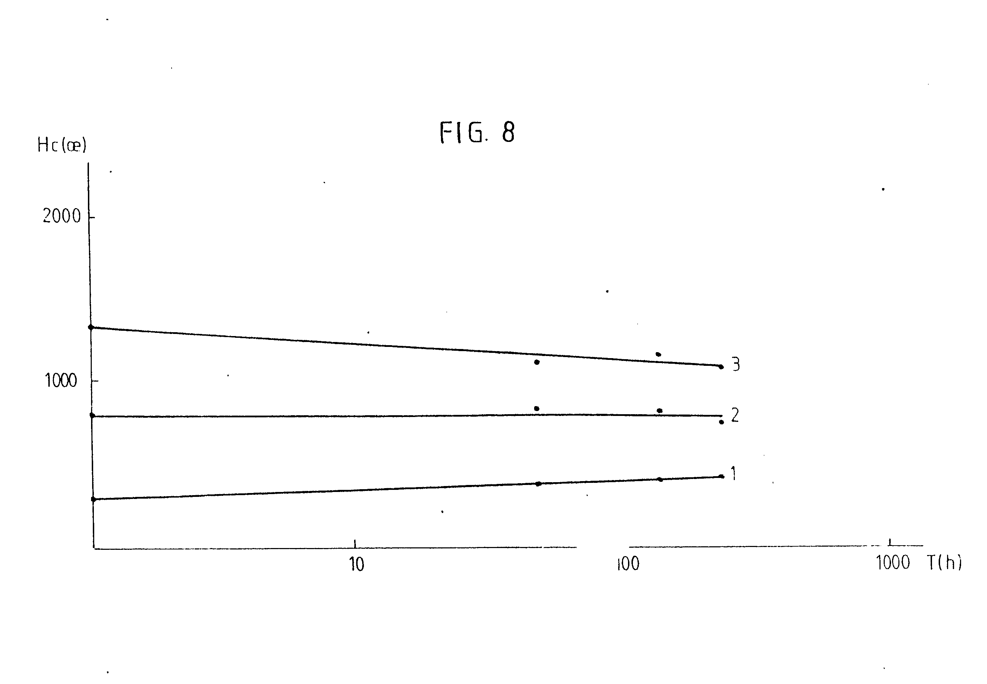

La figure 8 montre trois courbes 1, 2, 3 donnant la variation du champ coercitif $H_c$ du milieu magnétique selon l'invention en fonction du temps, pour des milieux MEMOI où l'épaisseur $e_{TRI}$ dans les couches de terres rares est respectivement 20, 30 et 40 Å (2, 3, 4 millièmes de micromètre) et l'épaisseur de la couche CMOI est de 150 Å (0,015 micromètre) pour un alliage Fe-Tb où X = 14,5 pour le terbium. On voit que le « vieillissement » du milieu magnétique d'enregistrement est très sensiblement atténué, voire même supprimé pour les courbes 1 et 2, puisque dans le cas de celles-ci le champ coercitif reste sensiblement constant en fonction du temps.

Ainsi qu'on peut le voir sur le tableau ci-joint (voir annexe 1), le champ coercitif $H_c$, ainsi que le rapport $H_c/H_s$ c'est-à-dire la rectangularité du cycle ($H_s$ étant le champ de saturation) augmente en fonction de l'épaisseur $e_{TRI}$ des couches de terre rare $TRI_1$ et $TRI_2$. Le milieu d'enregistrement choisi comme référence pour une épaisseur $e_{TRI} = 0$, a été supposé choisi avec un vieillissement maximum, c'est-à-dire avec champ coercitif $H_c$ nul (ce qui correspond à un cycle d'hystérésis extrêmement plat analogue à celui du cycle d'hystérésis suivant un axe difficile d'aimantation).

On a pu observer expérimentalement, d'après les analyses de la composition physico-chimique de chacune des couches constituant le milieu d'enregistrement magnétique selon l'invention MEMOI, qu'il y a un très fort gradient de la concentration en atomes de terre rare au voisinage de chacune des couches de terre rare $TRI_1$ et $TRI_2$. On peut penser qu'une partie des atomes de terre rare migre des couches $TRI_1$ et $TRI_2$ d'une part vers la couche magnétooptique CMOI et d'autre part vers les couches diélectriques $DIELI_1$ et $DIELI_2$, jusqu'à ce qu'un équilibre s'établisse dans la répartition des atomes de terres rares, tant à l'intérieur de la couche magnétooptique CMOI que dans les couches $TRI_1$ et $TRI_2$ et dans les couches $DIELI_1$ et $DIELI_2$. Au bout d'un temps déterminé, il y a stabilisation des caractéristiques magnétiques du milieu d'enregistrement MEMOI.

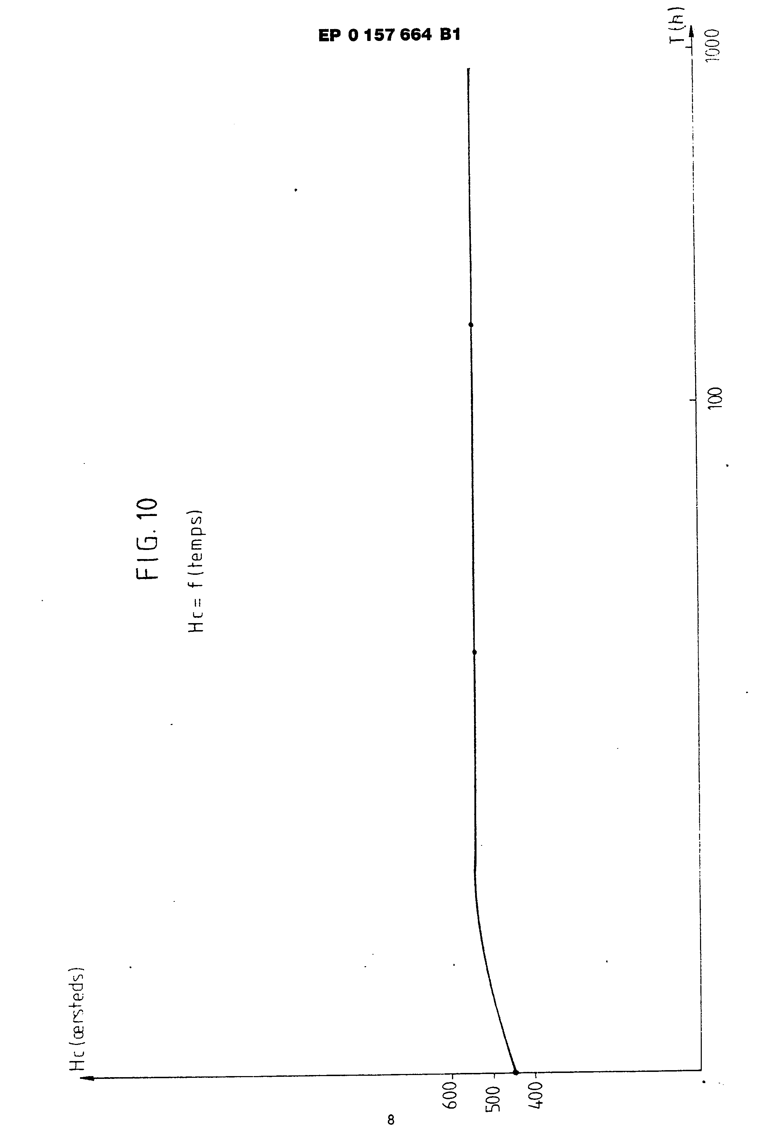

La figure 9 montre un second exemple de réalisation de l'invention, où la migration des atomes de terre rare de la couche magnétooptique vers les couches diélectriques qui l'entourent est complètement bloquée. Ceci est obtenu en remplaçant les couches diélectriques en oxyde de silicium par des couches d'alumine. On observe ainsi une absence totale de vieillissement de ce milieu magnétique d'enregistrement selon l'invention en fonction du temps, c'est-à-dire que le champ coercitif reste constant, ainsi que la rectangularité du cycle d'hystérésis magnétooptique.

Dans ce second exemple, on peut dire que les couches d'alumine constituent les moyens pour empêcher la diminution du nombre d'atomes de terre rare participant au magnétisme de la couche magnétique.

Le milieu d'enregistrement MEMOII selon l'invention montré à la figure 9 comprend :

le substrat SUBSII ;-
la couche réflectrice REFLECTII ;
la première couche diélectrique $DIELII_1$ ;
la couche magnétooptique CMOII ;
la seconde couche diélectrique $DIELII_2$.

Le substrat SUBSII, la couche réflectrice REFLECTII, la couche magnétooptique CMOII sont strictement identiques au substrat, à la couche réflectrice, et à la couche magnétooptique des figures 1 et 6.

7

## EP 0 157 664 B1

Les deux couches diélectriques DIELII$_1$ et DIELII$_2$ sont réalisées en alumine Al2O3.

La figure 10 montre que le champ coercitif reste rigoureusement constant au cours du temps pour le milieu magnétique de la figure 9, l'épaisseur des couches d'alumine étant de 230 Å (0,023 micromètre) pour DIELII$_1$, 910 Å (0,091 micromètre) pour DIELII$_2$, la couche CMOI ayant une épaisseur de 200 Å (0,02 micromètre) et étant constituée de Fe-Gadolinium où X pour le Gadolinium est égal à 25.

Il est bien évident que l'on peut envisager un troisième mode de réalisation selon l'invention combinant les figures 7 et 9, c'est-à-dire que l'on peut réaliser un milieu magnétique d'enregistrement analogue à celui de la figure 7 où les couches diélectriques DIELI$_1$ et DIELI$_2$ au lieu d'être réalisées en oxyde de silicium, sont réalisées en alumine.

Annexe 1

| échantillons | épaisseur de Tb exprimée en Å ($10^{-4}$ micromètre) | Hc exprimée en Oe ($10^3/4$ $\pi$A/m) | Hs exprimée en Oe ($10^3/4$ $\pi$A/m) | Hc/Hs |
|---|---|---|---|---|
| R | 0 | 0 | 3 400 | 0 |
| 1 | 20 | 300 | 900 | 0,33 |
| 2 | 30 | 900 | 1 400 | 0,64 |
| 3 | 40 | 1 330 | 1 450 | 0,92 |

## Revendications

1. Milieu magnétique (MEMOI) d'enregistrement multicouches comprenant au moins une couche magnétique (CMOI) formée d'un alliage comportant un métal du groupe des terres rares lourd et un métal du groupe de la première série de transition entouré d'au moins deux couches d'oxyde diélectriques (DIELI$_1$, DIELI$_2$), caractérisé en ce qu'il comprend deux couches de métal (TRI$_1$, TRI$_2$) du groupe des terres rares disposées chacune entre la couche magnétique et l'une des couches d'oxyde diélectriques, ayant pour fonction d'empêcher la diminution du nombre d'atomes de terre rare participant au magnétisme de la couche magnétique.

2. Milieu magnétique (MEMOII) d'enregistrement multicouches comprenant au moins une couche magnétique (CMOII) formée d'un alliage comportant un métal du groupe des terres rares lourd et un métal du groupe de la première série de transition entouré d'au moins deux couches d'oxyde diélectriques (DIELII$_1$, DIELII$_2$), caractérisé en ce que les couches d'oxyde diélectriques sont constituées par des couches d'alumine ayant pour fonction d'empêcher la diminution du nombre d'atomes de terre rare participant au magnétisme de la couche magnétique.

## Claims

1. Magnetic medium (MEMOI) for multilayer recording comprising at least one magnetic layer (CMOI) formed from an alloy comprising a metal from the group of heavy rare earths and a metal from the group of the first transition series, surrounded with at least two dielectric oxide layers (DIELI$_1$, DIELI$_2$), characterised in that it comprises two layers of metal (TRI$_1$, TRI$_2$) from the group of rare earths each arranged between the magnetic layer and one of the dielectric oxide layers, having the function of preventing the reduction in the number of rare earth atoms participating in the magnetism of the magnetic layer.

2. Magnetic medium (MEMOII) for multilayer recording comprising at least one magnetic layer (CMOII) formed from an alloy comprising a metal from the group of heavy rare earths and a metal from the group of the first transition series, surrounded with at least two dielectric oxide layers (DIELII$_1$, DIELII$_2$), characterised in that the dielectric oxide layers are constituted by layers of alumina, having the function of preventing the reduction in the number of rare earth atoms participating in the magnetism of the magnetic layer.

## Patentansprüche

1. Vielschichtiges magnetisches Aufzeichnungsmedium (MEMOI) mit wenigstens einer magnetischen Schicht (CMOI), die aus einer Legierung gebildet ist, welche ein schweres Metall aus der Gruppe der seltenen Erden sowie ein Metall aus der Gruppe der ersten Übergangsserie umfaßt und von

8

wenigstens zwei dielektrischen Oxidschichten (DIELI$_1$, DIELI$_2$) umgeben ist, dadurch gekennzeichnet, daß es zwei Metallschichten (TRI$_1$, TRI$_2$) aus der Gruppe der seltenen Erden umfaßt, wovon jede zwischen der magnetischen Schicht und einer der dielektrischen Oxidschichte angeordnet ist und deren Funktion darin besteht, die Verminderung der Anzahl der Atome der seltenen Erden zu verhindern, die zum Magnetismus der magnetischen Schicht beitragen.

2. Vielschichtiges magnetisches Aufzeichnungsmedium (MEMOII) mit wenigstens einer magnetischen Schicht (CMOII), die aus einer Legierung gebildet ist, welche ein schweres Metall aus der Gruppe der seltenen Erden sowie ein Metall aus der Gruppe der ersten Übergangsserie umfaßt und von wenigstens zwei dielektrischen Oxidschichten (DIELII$_1$, DIELII$_2$) umgeben ist, dadurch gekennzeichnet, daß die dielektrischen Oxidschichten von Aluminiumoxidschichten gebildet sind, deren Funktion darin besteht, die Verminderung der Anzahl der Atome aus seltenen Erden zu verhindern, die zum Magnetismus der magnetischen Schicht beitragen.

# FIG. 1

MEMO

DIEL$_2$

CMO

DIEL$_1$

REFLECT

SUBS

# FIG. 2

FR

Fi$_1$

Fr$_1$    Fr$_2$    Fr$_3$    Fr$_4$

S$_1$

Fi$_2$    Fr$_2$    Fr$_3$    Fr$_4$    CMO

S$_2$

Fi$_2$    DIEL$_1$

S$_3$    Fi$_2$    Fr$_2$    Fr$_3$    Fr$_4$    Fr$_4$

Fr$_2$    Fr$_3$

REFLECT

SUBS

FIG. 3

FIG. 4

FIG. 5

FIG.6

# FIG. 7

MEMOI

~DIEL I$_2$

~TRI$_2$

~CMOI

~TRI$_1$

~DIELI$_1$

~REFLECT I

~SUBS I

# FIG. 9

Al$_2$O$_3$

MEMOII

~DIEL II$_2$

~CMOII

~DIEL II$_1$

~REFLECT II

~SUBS II

6

EP 0 157 664 B1

FIG. 8

Hc (œ)

2000

1000

10          100          1000    T(h)

3

2

1

7

FIG. 10

Hc = f (temps)